(19) **Europäisches Patentamt**
**European Patent Office**
**Office européen des brevets**

(11) **EP 1 759 091 B1**

(12) **EUROPÄISCHE PATENTSCHRIFT**

(45) Veröffentlichungstag und Bekanntmachung des Hinweises auf die Patenterteilung:
**14.11.2007 Patentblatt 2007/46**

(51) Int Cl.:
**F01D 5/14** (2006.01)

(21) Anmeldenummer: **05768242.9**

(86) Internationale Anmeldenummer:
**PCT/EP2005/006286**

(22) Anmeldetag: **11.06.2005**

(87) Internationale Veröffentlichungsnummer:
**WO 2005/124107 (29.12.2005 Gazette 2005/52)**

(54) **TURBINENRAD IN EINER ABGASTURBINE EINES ABGASTURBOLADERS**

TURBINE WHEEL IN A WASTE GAS TURBINE OF A WASTE GAS TURBOCHARGER

ROUE DE TURBINE D'UNE TURBINE A GAZ D'ECHAPPEMENT D'UN TURBOCOMPRESSEUR A GAZ D'ECHAPPEMENT

(84) Benannte Vertragsstaaten:
**DE FR GB**

(30) Priorität: **19.06.2004 DE 102004029830**

(43) Veröffentlichungstag der Anmeldung:
**07.03.2007 Patentblatt 2007/10**

(73) Patentinhaber: **DaimlerChrysler AG**
**70327 Stuttgart (DE)**

(72) Erfinder:
• **SCHMID, Wolfram**
**72622 Nürtingen (DE)**
• **SUMSER, Siegfried**
**70327 Stuttgart (DE)**

(56) Entgegenhaltungen:
**DE-A1- 10 212 032      US-A- 5 094 587**

EP 1 759 091 B1

## Beschreibung

Die Erfindung bezieht sich auf ein Turbinenrad in einer Abgasturbine eines Abgasturboladers nach dem Oberbegriff des Anspruches 1.

In der Druckschrift DE 102 12 032 A1 wird ein Abgasturbolader für eine Brennkraftmaschine beschrieben, bestehend aus einem Verdichter im Ansaugtrakt der Brennkraftmaschine und einer Abgasturbine im Abgasstrang, die von den unter Druck stehenden Abgasen angetrieben wird, wobei die Drehbewegung auf das Verdichterrad übertragen wird, das daraufhin Umgebungsluft auf einen erhöhten Ladedruck komprimiert, welcher den Zylindern der Brennkraftmaschine zugeführt wird. Dem Turbinenrad der Abgasturbine ist ein veränderlich einstellbares Leitgitter im Turbineneintrittsquerschnitt vorgelagert, wodurch der wirksame Turbineneintrittsquerschnitt in Abhängigkeit des aktuellen Betriebszustandes der Brennkraftmaschine auf einen gewünschten Wert eingestellt werden kann. Hierdurch kann sowohl im Motorbremsbetrieb als auch in der befeuerten Antriebsbetriebsweise das Verhalten der Brennkraftmaschine optimiert werden. Im Motorbremsbetrieb wird das Leitgitter in eine den Strömungseintrittsquerschnitt reduzierende Staustellung versetzt, wodurch die Abgase stromauf der Abgasturbine aufgestaut werden und die Brennkraftmaschine zusätzliche Verdichterarbeit gegen den erhöhten Abgasgegendruck verrichten müssen, was zu einer signifikanten Steigerung der Motorbremsleistung führt. In der befeuerten Antriebsbetriebsweise wird dagegen das Leitgitter zur Steigerung der Motorleistung in eine den Strömungseintrittsquerschnitt vergrößernde Öffnungsstellung verstellt, so dass ein maximaler Abgasdurchsatz durch die Abgasturbine möglich ist.

Aufgrund der hohen Motorbremsleistungen wird das Turbinenrad im Motorbremsbetrieb am höchsten belastet. Der hohe Abgasgegendruck führt in Verbindung mit dem reduzierten Strömungsquerschnitt zu Verdichtungsstößen mit hoher Geschwindigkeit, welche beim Auftreffen auf das Turbinenrad zur Zerstörung der Turbinenradschaufeln führen können. Zur Vermeidung derartiger Zerstörungen muss sichergestellt werden, dass die Turbinenradschaufeln keinesfalls bis in den Bereich ihrer ersten Eigenfrequenz zu Schwingungen angeregt werden, da andernfalls die Bruchgefahr massiv ansteigen würde. Um dem entgegenzuwirken, kann beispielsweise die Dicke der Turbinenradschaufeln erhöht werden. Hiermit geht aber eine unerwünschte Erhöhung des Massenträgheitsmomentes einher, wodurch das transiente Verhalten des Abgasturboladers verschlechtert wird. Außerdem wird eine Steigerung der Turbinendrehzahl erschwert, was unter Gesichtspunkten einer weiteren Leistungssteigerung insbesondere im Motorbremsbetrieb gewünscht ist.

Die US 5,094,587 zeigt einen Abgasturbolader für eine Brennkraftmaschine mit einem Verdichter im Ansaugtrakt und einer Abgasturbine im Abgasstrang des Motors. Das Turbinenrad wird von den unter Druck ausgestoßenen Abgasen des Motors angetrieben, wobei die Drehbewegung des Turbinenrades über eine Welle auf das Verdichterrad übertragen wird, das daraufhin Umgebungsluft ansaugt und auf einen erhöhten Ladedruck verdichtet, welche den Einlässen der Brennkraftmaschine zugeführt wird. Im Turbinengehäuse der Abgasturbine sind zwei Abgasfluten ausgebildet, über die jeweils dem Turbinenrad Abgas zugeführt wird. Die beiden Abgasfluten münden jeweils in einer halbaxialen bzw. halbradialen Stellung auf die Turbinenradschaufeln, die auf der Turbinenradnabe angeordnet sind. Das halbaxial bzw. halbradial auf die Turbinenradschaufeln auftreffende Abgas der Abgasfluten wird im Turbinenrad in eine Axialströmung umgelenkt und verlässt das Turbinenrad axial. Um die im Betrieb auftretenden hohen Belastungen bei den hohen Drehzahlen aufnehmen zu können, weisen die Turbinenradschaufeln im Bereich der Anbindung an die Turbinenradnabe eine vergrößerte Dicke auf.

Der Erfindung liegt das Problem zugrunde, mit einfachen Maßnahmen ein Turbinenrad in einer Abgasturbine eines Abgasturboladers zu schaffen, welches für hohe Leistungen insbesondere im Motorbremsbetrieb und für eine lange Lebensdauer ausgelegt ist.

Dieses Problem wird erfindungsgemäß mit den Merkmalen des Anspruches 1 gelöst. Die Unteransprüche geben zweckmäßige Weiterbildungen an.

Die Turbinenradschaufeln sind in der Weise ausgebildet, dass das Verhältnis von Nabenkonturdicke zur Außenkonturdicke jeder Turbinenradschaufel zumindest für die axiale Hälfte des Turbinenrades, welche dem Turbinenradaustritt benachbart ist, größer oder gegebenenfalls auch gleich dem Wert 8 ist, so dass die Nabenkonturdicke mindestens 8-mal größer ist als die Außenkonturdicke. Dieses Dickenverhältnis für die Turbinenradschaufeln stellt sicher, dass im Bereich der Turbinenradnabe jede Schaufel verhältnismäßig dick und im Bereich ihrer Außenkontur verhältnismäßig dünn ausgebildet ist. Die relativ dünne Beschaufelung im Bereich der Außenkontur erfüllt Forderungen nach hohen Turbinenwirkungsgraden. Das Massenträgheitsmoment wird vergleichsweise niedrig gehalten, was eine Steigerung der Turbinendrehzahl und damit einhergehend eine überproportionale Leistungssteigerung der Abgasturbine im transienten Betrieb begünstigt. Die zugleich verhältnismäßig dickwandige Ausführung im Nabenbereich gewährleistet eine ausreichende Stabilität auch bei den gesteigerten Turbinendrehzahlen.

Da bereits eine Anhebung der Laderdrehzahl von beispielsweise 10 % zu einer Steigerung der Motorbremsleistung von ca. 30 % führt, führen Maßnahmen zur Drehzahlerhöhung des Abgasturboladers zu einer überproportionalen Erhöhung der Motorbremsleistungen. Durch die erfindungsgemäße Schaufelgestaltung der Turbinenradschaufeln, insbesondere durch die verhältnismäßig dickwandige Ausführung im Bereich der Radnabe, wird eine deutliche Erhöhung der ersten Eigenfrequenz des Turbinenrades erzielt, wodurch auch bei erhöhten Laderdrehzahlen ein ausreichender Abstand zur Resonanzdrehzahl eingehalten werden kann. Die Schaufelbruchgefahr wird hierdurch erheblich reduziert.

Ein in dieser Weise ausgebildetes Turbinenrad lässt sich in besonders vorteilhafter Weise in einer Abgasturbine einsetzen, die mit variabler Turbinengeometrie zur veränderlichen Einstellung des wirksamen Turbineneintrittsquerschnitts ausgestattet ist. Derartige variable Turbinengeometrien werden zur Leistungssteigerung sowohl im Motorbremsbetrieb als auch in der befeuerten Antriebsbetriebsweise eingesetzt. Als variable Turbinengeometrie kommt insbesondere ein im Turbineneintrittsquerschnitt angeordnetes Leitgitter mit verstellbaren Leitschaufeln in Betracht. Die variable Turbinengeometrie ist grundsätzlich zwischen einer Staustellung mit minimalem Strömungsquerschnitt und einer Offenstellung mit maximal geöffnetem Strömungsquerschnitt zu verstellen. Die Verwendung einer variablen Turbinengeometrie in der Abgasturbine führt zu einer erhöhten Belastung des Turbinenrades, da insbesondere bei in Staustellung befindlicher variabler Turbinengeometrie zwischen benachbarten Leitschaufeln Verdichtungsstöße mit hoher Geschwindigkeit auftreten können, die auf das Turbinenrad auftreffen. Derartige erhöhte Belastungen können aber durch die vorbeschriebene Ausbildung der Turbinenradschaufeln kompensiert werden.

Zweckmäßig folgt der Verlauf der Schaufelraddicke in Radialrichtung zwischen der Nabenkontur und der Außenkontur einer Potenzfunktion in Abhängigkeit des aktuellen Radius der Turbinenradschaufel, wobei der Exponent der Potenzfunktion vorteilhaft einen Wert größer als 1 und kleiner als 2, insbesondere kleiner oder gleich 1.2 einnimmt. Dies bedeutet, dass die Schaufelraddicke benachbart zur Turbinenradnabe überproportional stärker ausgebildet ist als im Bereich der Außenkontur des Turbinenrades.

Gemäß einer weiteren zweckmäßigen Ausführung ist vorgesehen, dass die dem Turbinenradeintritt benachbarte, axiale Stirnwand des Turbinenrades sich radial bis zum größten Außendurchmesser der Turbinenradschaufeln erstreckt. Durch diese gegenüber dem Stand der Technik größere radiale Erstreckung der Stirn- bzw. Rückwand des Turbinenrades können Wirkungsgradvorteile von über 2 % erzielt werden, gegebenenfalls bei zweiflutigen asymmetrischen Turbinengehäusen sogar bis über 5 %, da Fehlströme und unerwünschte Verwirbelungen gemindert oder sogar vollständig eliminiert werden. Um die Zunahme der Massenträgheit und Steifigkeit der Wandung im äußeren Radbereich gering zu halten, wird die axiale Dicke der Stirnwand zweckmäßig kleiner als 1 % vom größten Außendurchmesser der Turbinenradschaufeln gewählt.

Weitere Vorteile und zweckmäßige Ausführungen sind den weiteren Ansprüchen, der Figurenbeschreibung und den Zeichnungen zu entnehmen. Es zeigen:

Fig. 1 eine schematische Darstellung einer Brennkraftmaschine mit Abgasturbolader, deren Abgasturbine mit variabler Turbinengeometrie ausgestattet ist,

Fig. 2 eine Abgasturbine in Seitenansicht,

Fig. 3 ein Schaubild mit dem Verlauf der Schaufeldicke der Turbinenradschaufeln als Funktion der aktuellen Achsposition, dargestellt im Verlauf zwischen Turbinenradeintritt und Turbinenradaustritt für eine Vielzahl radialer Abstandspositionen zwischen Radnabenkontur und Außenkontur.

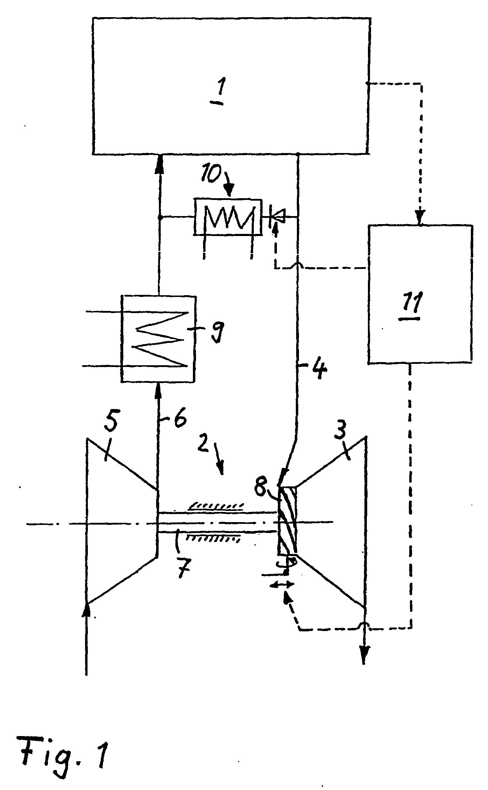

Bei der in Fig. 1 dargestellten Brennkraftmaschine 1 - eine Diesel-Brennkraftmaschine oder ein Ottomotor - handelt es sich um einen aufgeladenen Motor mit einem Abgasturbolader 2, welcher eine Abgasturbine 3 im Abgasstrang 4 der Brennkraftmaschine sowie einen Verdichter 5 im Ansaugtrakt 6 umfasst. Das Turbinenrad der Abgasturbine 3 und das Verdichterrad des Verdichters 5 sind über eine Welle 7 drehgekoppelt. In der befeuerten Antriebsbetriebsweise der Brennkraftmaschine treiben die vom Motor unter Druck ausgestoßenen Abgase das Turbinenrad an, dessen Drehbewegung über die Welle 7 auf das Verdichterrad übertragen wird, wodurch Umgebungsluft angesaugt und auf einen erhöhten Ladedruck komprimiert wird. Zur Verbesserung der Aufladung ist die Abgasturbine 3 mit einer variablen Turbinengeometrie 8 ausgestattet, welche insbesondere als Leitgitterring im Turbineneintrittsquerschnitt mit verstellbaren Leitschaufeln ausgebildet ist.

Die vom Verdichter 5 komprimierte Verbrennungsluft wird in einem stromab des Verdichters im Ansaugtrakt 6 angeordneten Ladeluftkühler 9 gekühlt und anschließend unter Ladedruck den Zylindern der Brennkraftmaschine 1 zugeführt. Abgasseitig strömen die Abgase über den Abgasstrang 4 in die Abgasturbine 3, treiben das Turbinenrad an und verlassen anschließend im entspannten Zustand die Abgasturbine und werden nachfolgend einer Abgasbehandlung zugeführt.

Des Weiteren ist der Brennkraftmaschine 1 eine Abgasrückführeinrichtung 10 zugeordnet, welche eine Rückführleitung zwischen dem Abgasstrang 4 stromauf der Abgasturbine 3 und dem Ansaugtrakt 6 stromab des Ladeluftkühlers 9 umfasst. In der Rückführleitung ist ein einstellbares Ventil sowie ein Abgaskühler angeordnet.

Sämtliche einstellbaren Aggregate, welche der Brennkraftmaschine 1 zugeordnet sind, werden in Abhängigkeit von Zustands- und Betriebsgrößen der Brennkraftmaschine über eine Regel- und Steuereinheit 11 eingestellt, so z. B. die variable Turbinengeometrie 8 und auch das Ventil in der Abgasrückführeinrichtung 10.

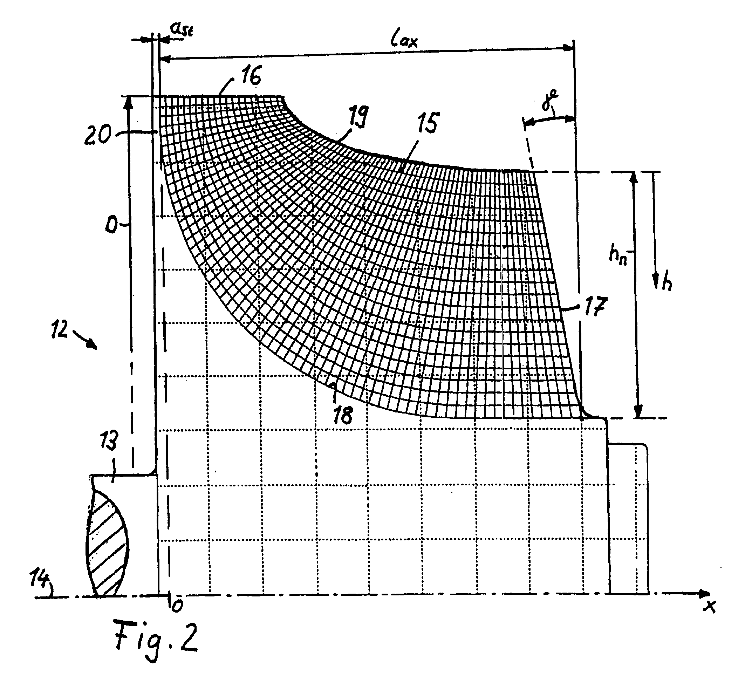

Das in Fig. 2 dargestellte Turbinenrad 12 besitzt eine in Achsrichtung der Radachse 14 verlaufende Turbinenradnabe 13 und auf der Turbinenradnabe aufsitzende, über den Umfang verteilte und insbesondere einteilig mit der Turbinenradnabe ausgebildete Turbinenradschaufeln 15. In der Darstellung nach Fig. 2 ist die dargestellte Turbinenradschaufel 15 mit einem Gitternetz überzogen, welches den Verlauf bzw. die Ausrichtung der dreidimensional gekrümmten Turbinenradschaufel 15 kennzeichnet.

Die Turbinenradschaufeln 15 erstrecken sich zwischen einem radialen Turbinenradeintritt, welcher durch die Turbinenradeintrittskante 16 gekennzeichnet ist, über die das Turbinenrad von den Abgasen der Brennkraftmaschine radial angeströmt wird, und einem Turbinenradaustritt, welcher durch die axiale Turbinenradaustrittskante 17 gekennzeichnet ist. Das dargestellte Turbinenrad 12 eignet sich daher zur Verwendung in Radialturbinen. Die Turbinenradaustrittskante 17 schließt mit einer Ebene senkrecht zur Radachse 14 einen Winkel $\gamma$ ein, um den die radial außen liegenden Bereiche der Turbinenradschaufeln 15 zurückversetzt sind. Der Winkel $\gamma$ liegt zweckmäßig in einem Wertebereich zwischen 5° und 20° und beträgt insbesondere etwa 10°.

Die Turbinenradschaufeln 15 liegen radial zwischen der Nabenkontur 18 der Turbinenradnabe 13 und der Außenkontur 19, welche die Turbinenradschaufeln radial einhüllt. Zweckmäßig folgt die Schaufelraddicke d jeder Turbinenradschaufel 15 zwischen der Nabenkontur 18 und der Außenkontur 19 an einer beliebigen axialen Position der Funktion

$$d = d_a + (d_i - d_a)(h/h_N)^{ex} .$$

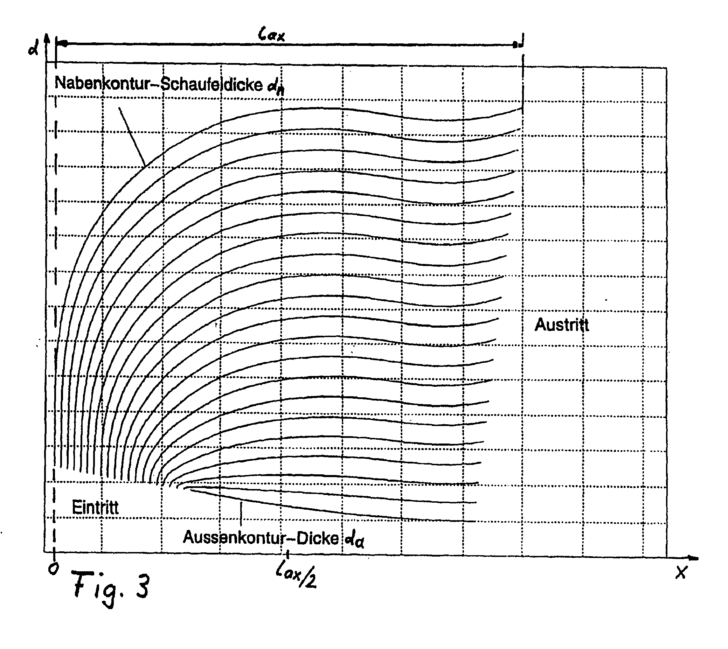

Hierin bezeichnet h die aktuelle radiale Position im Bereich der Turbinenradschaufel, ausgehend vom Außendurchmesser und radial nach innen verlaufend. $h_N$ ist die radiale Erstreckung zwischen Turbinenradnabe und Außendurchmesser, ex bezeichnet einen Exponenten, der im Wertebereich zwischen 1 und 2 liegt und insbesondere einen Wert kleiner oder gleich 1.2 einnimmt. Mit $d_n$ wird die Nabenkonturdicke der Turbinenradschaufel im Bereich der Nabenkontur 18, mit $d_a$ die Außenkonturdicke der Turbinenradschaufel im Bereich der radial außen liegenden Außenkontur 19 bezeichnet (siehe auch Fig. 3). Die in Fig. 2 dargestellten Linien des Gitternetzes, die zwischen Turbinenradeintrittskante 16 und Turbinenradaustrittskante 17 verlaufen, sind Höhenlinien in den Turbinenradschaufeln, wobei entlang einer Höhenlinie der Abstand zur Nabenkontur 18 bzw. zur Außenkontur 19 konstant bleibt.

Die Turbinenradschaufeln 15 erstrecken sich in Achsrichtung über die axiale Länge $l_{ax}$. Die Turbinenradeintrittskante 16 wird axial von der Rück- bzw. Stirnwand 20 begrenzt, die sich radial bis zum größten Außendurchmesser D der Turbinenradschaufeln erstreckt; im Bereich dieses größten Außendurchmessers D liegt auch die Turbinenradeintrittskante 16. Die Turbinenradschaufeln 15 schließen sich axial unmittelbar an die Stirnwand 20 an und verlaufen axial bis zur Radaustrittskante 17.

Die axiale Dicke $a_{st}$ der Stirnwand 20 beträgt vorteilhaft weniger als 1 % des größten Außendurchmesser D der Turbinenradschaufeln 15:

$$a_{st} < 0.01 D .$$

Diese Bedingung für die Dicke $a_{st}$ für die Stirnwand 20 stellt sicher, dass das Massenträgheitsmoment des Turbinenrades 12 trotz der großen radialen Erstreckung der Stirnwand nur geringfügig erhöht ist. Dem stehen die Vorteile des verbesserten Strömungsverlaufes sowie einer erhöhten Stabilität gegenüber.

Die in Fig. 3 dargestellten Linien entsprechen den Höhenlinien aus Fig. 2, welche sich zwischen dem Turbinenradeintritt und dem Turbinenradaustritt erstrecken und welche jeweils einen konstanten Abstand sowohl zur Nabenkontur als auch zur Außenkontur aufweisen. Die Linienschar gemäß Fig. 3 wird nach unten begrenzt von der Linie, welche unmittelbar im Bereich der Außenkontur liegt, wobei im Bereich der Außenkontur jede Turbinenradschaufel die Dicke $d_a$ aufweist. Nach oben wird die Linienschar von der Linie unmittelbar im Bereich der Nabenkontur begrenzt, wobei die Turbinenradschaufeln im Bereich der Nabenkontur die Schaufeldicke $d_n$ besitzen.

Die Turbinenradschaufeln 15 sind in der Weise ausgebildet, dass das Verhältnis von Nabenkonturdicke $d_n$ zur Außenkonturdicke $d_a$ jeder Turbinenradschaufel der Funktion

$$d_n/d_a > 8$$

folgt, wobei diese Beziehung nur in der dem Turbinenradaustritt zugewandten axialen Hälfte des Turbinenrades gilt, die durch

$$x/l_{ax} > 0.5$$

gekennzeichnet ist. x bezeichnet die aktuelle axiale Position, ausgehend von der Innenseite der dem Turbinenradeintritt benachbarten Stirnwand 20 des Turbinenrades.

Im zwischenliegenden Bereich zwischen der Außenkontur und der Nabenkontur folgt die Schaufelraddicke d jeder Turbinenradschaufel der oben genannten Potenzfunktion, die von der aktuellen radialen Position abhängt.

**Patentansprüche**

1.  Turbinenrad in einer Abgasturbine (3) eines Abgasturboladers (2), bestehend aus einer Turbinenradnabe (13) und einer Mehrzahl von auf der Turbinenradnabe (13) angeordneten Turbinenradschaufeln (15), die sich axial zwischen einem Turbinenradeintritt (16) und einem Turbinenradaustritt (17) erstrecken,
    **dadurch gekennzeichnet,**
    **dass** das Turbinenrad einen radialen Turbinenradeintritt aufweist und die Turbinenradschaufeln (15) im Bereich der Turbinenradeintrittskante (16) den größten Außendurchmesser (D) aufweisen, dass die dem Turbinenradeintritt (16) benachbarte Stirnwand (20) des Turbinenrades (12) sich radial bis zum größten Außendurchmesser (D) der Turbinenradschaufeln (15) erstreckt und dass die Turbinenradschaufeln (15) in der Weise ausgebildet sind, dass das Verhältnis von Nabenkonturdicke ($d_n$) zur Außenkonturdicke ($d_a$) jeder Turbinenradschaufel (15) in der dem Turbinenradaustritt (17) zugewandten axialen Hälfte des Turbinenrades (12) der Funktion

$$d_n/d_a > 8 \quad \text{für} \quad x/l_{ax} > 0.5 \, ,$$

    folgt, wobei

    $d_n$ die Nabenkonturdicke einer Turbinenradschaufel (15)
    $d_a$ die Außenkonturdicke einer Turbinenradschaufel (15)
    x die aktuelle axiale Position ausgehend von der dem Turbinenradeintritt (16) benachbarten Stirnwand des Turbinenrades (12)
    $l_{ax}$ die axiale Gesamtlänge des Turbinenrades (12)

    bezeichnet.

2.  Turbinenrad nach Anspruch 1,
    **dadurch gekennzeichnet,**
    **dass** die Schaufelraddicke (d) zwischen der Nabenkontur (18) und der Außenkontur (19) jeder Turbinenradschaufel (15) der Funktion

$$d = d_a + (d_i - d_a)(h/h_N)^{ex}$$

    folgt, wobei

    d die aktuelle Schaufelraddicke
    h die aktuelle radiale Position im Bereich der Turbinenradschaufel (15) ausgehend vom Außendurchmesser und radial nach innen verlaufend
    $h_N$ die radiale Erstreckung zwischen Turbinenradnabe (13) und Außendurchmesser
    ex einen Exponenten

    bezeichnet, und wobei der Exponent (ex) im folgenden Wertebereich liegt:

$$1 \leq ex \leq 2 .$$

3. Turbinenrad nach Anspruch 2,
   **dadurch gekennzeichnet,**
   **dass** der Exponent (ex) einen Wert kleiner oder gleich 1.2 einnimmt .

4. Turbinenrad nach einem der Ansprüche 1 bis 3,
   **dadurch gekennzeichnet,**
   **dass** die axiale Dicke ($a_{st}$) der Stirnwand (20) weniger als 1 % des größten Außendurchmesser (D) der Turbinenradschaufeln (15) beträgt:

$$a_{st} < 0.01 \ D .$$

5. Abgasturbolader für eine Brennkraftmaschine (1), mit einem Verdichter (5) und einer Abgasturbine (3), die ein Turbinenrad (12) nach einem der Ansprüche 1 bis 4 aufweist,
   **dadurch gekennzeichnet,**
   **dass** die Abgasturbine (3) mit variabler Turbinengeometrie (8) zur veränderlichen Einstellung des wirksamen Turbineneintrittsquerschnitts ausgestattet ist.

**Claims**

1. Turbine wheel in an exhaust gas turbine (3) of an exhaust gas turbocharger (2), composed of a turbine wheel hub (13) and a plurality of turbine wheel blades (15) which are arranged on the turbine wheel hub (13) and extend axially between a turbine wheel inlet (16) and a turbine wheel outlet (17), **characterized in that** the turbine wheel has a radial turbine wheel inlet and the turbine wheel blades (15) have the greatest external diameter (D) in the region of the turbine wheel inlet edge (16), **in that** the end wall (20), adjacent to the turbine wheel inlet (16), of the turbine wheel (12) extends radially as far as the greatest external diameter (D) of the turbine wheel blades (15) and **in that** the turbine wheel blades (15) are constructed in such a way that the ratio of the hub contour thickness ($d_n$) to the external contour thickness ($d_a$) of each turbine wheel blade (15) in the axial half, facing the turbine wheel outlet (17), of the turbine wheel (12) follows the function

$$d_n/d_a > 8 \text{ for } x/l_{ax} > 0.5,$$

where

   $d_n$ designates the hub contour thickness of a turbine wheel blade (15),
   $d_a$ designates the external contour thickness of a turbine wheel blade (15),
   x designates the current axial position starting from the end wall, adjacent to the turbine wheel inlet (16) of the turbine wheel (12), and
   $l_{ax}$ designates the axial overall length of the turbine wheel (12).

2. Turbine wheel according to Claim 1, **characterized in that** the blade wheel thickness (d) between the hub contour (18) and the external contour (19) of each turbine wheel blade (15) follows the function

$$d = d_a + (d_i - d_a)(h/h_N)^{ex},$$

where

   d designates the current blade wheel thickness

h designates the current radial position in the region of the turbine wheel blade (15) starting from the external diameter and extending radially inwards,

$h_N$ designates the radial extent between the turbine wheel hub (13) and external diameter,

ex designates an exponent,

and where the exponent (ex) lies in the following value range:

$$1 \leq ex \leq 2.$$

3. Turbine wheel according to Claim 2, **characterized in that** the exponent (ex) assumes a value less than or equal to 1.2.

4. Turbine wheel according to one of Claims 1 to 3, **characterized in that** the axial thickness ($a_{st}$) of the end wall (20) is less than 1% of the greatest external diameter (D) of the turbine wheel blades (15):

$$a_{st} < 0.01\ D.$$

5. Exhaust gas turbocharger for an internal combustion engine (1), having a compressor (5) and an exhaust gas turbine (3) which has a turbine wheel (12) according to one of Claims 1 to 4, **characterized in that** the exhaust gas turbine (3) is equipped with a variable turbine geometry (8) for variably setting the effective turbine inlet cross section.

**Revendications**

1. Roue de turbine dans une turbine à gaz d'échappement (3) d'un turbocompresseur (2) à gaz d'échappement, constituée d'un moyeu de roue (12) et d'une pluralité d'aubes de roue (15) agencées sur le moyeu de roue (13) et s'étendant axialement entre une entrée de roue (16) et une sortie de roue (17),
**caractérisée en ce que**
la roue de turbine comprend une entrée de roue radiale et les aubes de roue (15) présentent dans la zone de l'arête d'entrée de roue (16) le plus grand diamètre extérieur (D), **en ce que** la paroi frontale (20), voisine de l'entrée de roue (16), de la roue de turbine (12) s'étend radialement jusqu'au plus grand diamètre extérieur (D) des aubes de roue (15), et **en ce que** les aubes de roue (15) sont réalisées de telle manière que le rapport de l'épaisseur du contour de moyeu ($d_n$) sur l'épaisseur du contour extérieur ($d_a$) de chaque aube de roue (15), dans la moitié de la roue de turbine (12) axiale tournée vers la sortie de roue (17) suit la fonction :

$$d_n/d_a > 8 \text{ pour } x/l_{ax} > 0,5$$

dans laquelle :

$d_n$ désigne l'épaisseur du contour de moyeu d'une aube de roue (15),
$d_a$ désigne l'épaisseur du contour extérieur d'une aube de roue (15),
x désigne la position axiale actuelle, partant de la paroi frontale, voisine de l'entrée de roue (16), de la roue de turbine (12), et
$l_{ax}$ désigne la longueur axiale totale de la roue de turbine (12).

2. Roue de turbine selon la revendication 1,
**caractérisée en ce que**
l'épaisseur de roue à aubes (d) entre le contour de moyeu (18) et le contour extérieur (19) de chaque aube de roue (15) suit la fonction :

$$d = d_a + (d_i - d_a)(h/h_N)^{ex}$$

dans laquelle :

d désigne l'épaisseur actuelle de la roue à aubes,
h désigne la position radiale actuelle dans la zone de l'aube de roue (15) qui part du diamètre extérieur et qui s'étend radialement vers l'intérieur, $h_N$ désigne l'extension radiale entre le moyeu de roue (13) et le diamètre extérieur, et
ex désigne un exposant,

et dans laquelle l'exposant (ex) est situé dans la plage de valeurs suivante :

$$1 \leq ex \leq 2.$$

3. Roue de turbine selon la revendication 2,
**caractérisée en ce que** l'exposant (ex) adopte une valeur inférieure ou égale à 1,2.

4. Roue de turbine selon l'une des revendications 1 à 3,
**caractérisée en ce que**
l'épaisseur radiale ($a_{st}$) de la paroi frontale (20) s'élève à moins de 1 % du plus grand diamètre extérieur (D) des aubes de roue (15) :

$$a_{St} < 0,01 \; D.$$

5. Turbocompresseur à gaz d'échappement pour un moteur à combustion interne (1) comprenant un compresseur (5) et une turbine à gaz d'échappement (3) qui comprend une roue de turbine (12) selon l'une des revendications 1 à 4,
**caractérisé en ce que**
la turbine à gaz d'échappement (3) est équipée d'une géométrie de turbine variable (8) pour régler de façon modifiable la section d'entrée efficace de la turbine.

Fig. 1

Fig. 2

EP 1 759 091 B1

Nabenkontur-Schaufeldicke $d_n$

Austritt

Eintritt

Aussenkontur-Dicke $d_a$

$l_{ax}$

$l_{ax}/2$

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10212032 A1

- US 5094587 A